Europäisches Patentamt

European Patent Office

Office européen des brevets

(19)

(11) EP 0 574 336 B1

(12) **FASCICULE DE BREVET EUROPEEN**

(45) Date de publication et mention
de la délivrance du brevet:
**03.11.1999 Bulletin 1999/44**

(51) Int Cl.⁶: **G06T 7/00**, G01N 21/88,
G01N 21/89

(21) Numéro de dépôt: **93420232.6**

(22) Date de dépôt: **08.06.1993**

(54) **Dispositif et procédé de détection au défilé de défauts de surface sur des produits longs métalliques**

Vorrichtung und Verfahren zum Nachweis der Oberflächenfehler von gefährdeten, langgestreckten, metallischen Werkzeugen

Device and method for detecting surface flaws in moving, elongated, metallic objects

(84) Etats contractants désignés:
**CH DE FR IT LI NL SE**

(30) Priorité: **10.06.1992 FR 9206987**

(43) Date de publication de la demande:
**15.12.1993 Bulletin 1993/50**

(73) Titulaire: **VALTUBES**
**92100 Boulogne-Billancourt (FR)**

(72) Inventeurs:
• **Gorria, Patrick**
**F-71200 St. Sernin du Bois (FR)**
• **Jender, Hafid**
**F-21000 Dijon (FR)**
• **Paindavoine, Michel**
**F-71200 Le Creusot (FR)**
• **Truchetet, Frédéric**
**F-71710 Marmagne (FR)**
• **Gérard, Pascal**
**F-21500 Montbard (FR)**
• **Ngô, Phu-An**
**F-59620 Aulnoye (FR)**

(74) Mandataire: **Desolneux, Jean-Paul Charles**
**Setval**
**Division Propriété Industrielle**
**130, rue de Silly**
**92100 Boulogne-Billancourt (FR)**

(56) Documents cités:
WO-A-92/08967          DE-A- 3 412 503
GB-A- 2 224 831

• IRON AND STEEL ENGINEER vol. 67, no. 5, Mai 1990, PITTSBURGH US pages 26 - 29 M. HO 'Surface inspection system with defect classification'
• IRON AND STEEL ENGINEER vol. 67, no. 5, Mai 1990, PITTSBURGH US pages 26 - 29 M. HO 'Surface inspection system with defect classification'

## Description

Le dispositif et le procédé qui font l'objet de l'invention concernent la détection au défilé des défauts de surface sur des produits métalliques longs tels que des tubes, des barres, des bandes ou des profils divers.

On connaît différents moyens permettant de détecter au défilé, des défauts sur des produits longs métalliques. Ces moyens utilisent, par exemple, l'émission d'ultra-sons ou la production de courants de Foucault. Ces moyens ont l'inconvénient de ne pas permettre la détection des défauts de surface tels que des rayures de faible profondeur, des enfoncements très localisés, des changements de teinte provoqués par des oxydations ou des attaques chimiques localisées ou encore des dépôts de matières étrangères de faible épaisseur.

L'utilisation d'une caméra linéaire C.C.D. pour l'inspection de bandes métalliques est décrite dans l'ouvrage intitulé "Automated visual inspection" de B.G. Batchelor, D.A. Hill et D.C. Hodgson (I.F.S. Publications Ltd. U.K. 1985). Selon les exemples donnés pages 288-289, il est aussi possible de détecter des trous dans des bandes minces. On utilise pour cela, comme surface réceptrice, des barrettes comportant 256, 512 ou 1024 pixels suivant la largeur de la bande. L'éclairage de celle-ci peut être effectué par réflexion ou par transmission, ce qui donne une beaucoup plus grande sensibilité. La possibilité de détecter et/ou mesurer des défauts d'aspect tels que des taches colorées et aussi des rayures ou des dénivellations n'est pas envisagée.

Le document « Surface inspection system with defect classification » publié dans la Revue Iron and Steel Engineer de mai 1990 pages 26-29 propose une méthode de contrôle au défilé de bande métallique à l'aide de caméras linéaires CCD : l'information lue sur les pixels de la barrette permet à chaque instant et seulement sur une ligne transversale d'identifier la présence d'un « objet » par comparaison de la valeur numérique du niveau d'éclairement d'un pixel avec celles des pixels voisins au même instant. L'information « position des pixels » et « niveau d'éclairement » de l'objet détecté relative à la ligne considérée est mémorisée pour reconstituer les différentes caractéristiques de l'objet et l'identifier par comparaison à des caractéristiques d'objets-types en mémoire. Cette méthode, si elle permet de caractériser complètement des défauts, nécessite des post-traitements lourds pour pouvoir réaliser un contrôle industriel automatique.

On a recherché la possibilité de mettre au point un dispositif d'inspection automatique permettant de détecter, au défilé, de préférence en un seul passage, sur des produits longs métalliques, des défauts de teinte localisés tels que des taches, de diamètre au moins égal à environ 1 mm, ou encore des défauts de teinte plus étendus, par exemple jaunes ou bleus et aussi des défauts de relief tels que des rayures, des fissures fines ou éraflures ou encore des empreintes par des chocs ou des trous de faible diamètre ou tout autre défaut superficiel entraînant une faible dénivellation ou un changement de teinte notable.

Le procédé et le dispositif de contrôle automatique de produits longs par vision artificielle qui font l'objet de l'invention permettent de détecter ces différents types de défauts, d'en mesurer l'importance de façon quantitative et de supprimer ou d'atténuer considérablement l'incidence de l'aspect général de la surface à contrôler.

Cet objectif est atteint par le procédé de la revendication 1 et le dispositif de la revendication 17.

Ce procédé et ce dispositif concernent la détection de défauts sur la surface de produits longs métalliques tels que des tubes, des barres, des profilés ou des bandes.Ils permettent de contrôler des défauts de toutes natures tels que des piqûres, des fissures ou éraflures, des empreintes ou denivellations provoquées par des chocs ou d'autres causes, des dépôts superficiels et également des taches de toutes dimensions et de toutes natures telles que, par exemple, des couleurs d'oxydation.

Ce procédé et ce dispositif d'inspection automatique par vision artificielle permettent l'examen en continu d'un produit long en défilement à une vitesse pouvant atteindre couramment 1 m/s. Le procédé mis en oeuvre a, pour particularité, qu'il permet de distinguer les défauts véritables des légères variations des signaux reçus par les appareils de détection, variations considérées comme normales et dues à un ensemble de causes mineures sans signification réelle sur la qualité de la surface des produits. Le procédé permet aussi de ne pas tenir compte de certains défauts de dimensions trop faibles pour avoir une incidence sur les caractéristiques d'utilisation des produits.

Ce procédé consiste à mettre en oeuvre au moins une caméra linéaire de type CCD dont l'axe optique est dirigé vers la surface du produit long à contrôler. Un moyen d'éclairement éclaire la zone du produit vers laquelle est orientée la caméra. La surface sensible de celleci est constituée par une barrette linéaire de N pixels orientée transversalement par rapport à l'axe de défilement du produit. Une optique adaptée permet la mise au point de la caméra sur la surface éclairée du produit. Un moyen d'entraînement permet de faire défiler le produit suivant l'axe de défilement à la vitesse voulue.

Des moyens d'acquisition et de traitement informatique permettent, à des intervalles de temps successifs égaux "t", de mesurer des valeurs numériques "niv i" correspondant pour chaque pixel à la quantité de lumière reçue au bout du temps "t". Afin de limiter le nombre d'opérations élémentaires, on peut déterminer "niv i" sur une série de pixels N1 choisie parmi les N pixels de la barrette,

Dans le cas, par exemple, d'une barrette de 256 pixels, on peut, par exemple, limiter le nombre N1 à 100 et répartir ces 100 pixels de façon régulière de façon qu'ils recouvrent en largeur toute la zone de l'image du produit qu'on se propose de contrôler, ceci quelle que soit la dimension du produit à contrôler dans des limites déterminées.

Les moyens d'acquisition et de traitement sont mis en oeuvre de façon que, à des intervalles de temps successifs égaux "t", on puisse mesurer pour chaque pixel "i" un niveau "niv i" dont la valeur numérique correspond à la quantité de lumière reçue pendant le temps "t". Les valeurs "niv i" les plus élevées sont obtenues pour un excellent état de surface du produit qui réfléchit, comme un miroir, la lumière provenant du moyen d'éclairement. Les taches absorbent une quantité de lumière plus ou moins importante, les rayures ou dénivellations diverses dévient ou dispersent la lumière.

Un moyen efficace de repérer ces défauts consiste à mesurer les écarts entre les valeurs numériques "niv i" de chaque pixel mesurées successivement après deux temps d'exposition tels que t1, t2. On peut ensuite déterminer la somme de ces écarts pour l'ensemble des N1 pixels, l'évolution de la valeur de cette somme permettant de détecter l'apparition ou la disparition de défauts.

Pour mieux observer l'évolution de ces écarts, on peut faire la somme de leurs valeurs absolues pour l'ensemble des N1 Pixels suivant la relation:

$$\text{Cumul 1} = \sum_{i=1}^{i=N1} \left| \text{niv}(i, t_2) - \text{niv}(i, t_1) \right|$$

L'obtention de la somme en valeur absolue de ces écarts sur la longueur d'une barrette, à deux temps successifs, permet de détecter l'apparition ou la disparition de défauts. On observe cependant une dispersion importante de ces écarts ainsi cumulés due à des faibles variations du pouvoir réfléchissant de la surface métallique et à de faibles taches sans incidence réelle sur la qualité du produit.

On peut calculer à partir de deux valeurs successives de "Cumul 1" déterminées entre des temps d'exposition tels que $t_1$, $t_2$, $t_3$ une valeur d'écart combinée P1 telle que:

$$P1 = \left| \text{Cumul 1}(t_3 - t_2) - \text{Cumul 1}(t_2 - t_1) \right|$$

P1 étant pris en valeur absolue.

On a développé une méthode de traitement des informations fournies par ces écarts qui s'est avérée d'une beaucoup plus grande efficacité.

Selon cette méthode, on limite à une valeur maximale, dite "seuil de gris", la valeur numérique "niv i" pour les calculs d'écart, toutes les valeurs supérieures étant ramenées à ce seuil. De plus, on effectue le cumul des écarts non pas en valeur absolue mais en valeur algébrique, la soustraction des valeurs "niv i" étant toujours effectuée dans le même sens par rapport aux temps d'exposition successifs.

La somme des valeurs algébriques de ces écarts pour l'ensemble des N1 pixels s'exprime par la relation:

$$\text{Cumul 2} = \sum_{i=1}^{i=N1} \left[ (\text{niv i seuil}, t_2) - (\text{niv i seuil}, t_1) \right]$$

On calcule ensuite à partir de deux valeurs successives de "Cumul 2" déterminées entre des temps d'exposition tels que t1, t2, t3 une valeur d'écart combinée P2 telle que:

$$P2 = \left| \text{Cumul 2}_{(t3-t2)} - \text{Cumul 2}_{(t2-t1)} \right|$$

Cette valeur P2 qui résulte de la soustraction algébrique des deux valeurs de Cumul 2 est prise en valeur absolue. Elle permet de repérer et de mieux faire ressortir les défauts dont on est en mesure d'apprécier l'extension et l'évolution dans le temps.

Suivant l'invention, pour obtenir le maximum de sensibilité dans l'observation des taches et autres défauts

EP 0 574 336 B1

de teinte, on doit mettre en oeuvre une caméra dont l'axe optique fait, avec un plan perpendiculaire à l'axe de défilement, un angle aussi faible que possible. De préférence, on limite l'angle fait par cet axe optique avec le plan perpendiculaire à l'axe de défilement à pas plus de 30° pour l'observation de ces taches ou autres défauts de teintes.

Toujours suivant l'invention, pour l'observation des défauts de relief tels que des dénivellations et autres défauts de surface tels que rayures, fissures, éraflures ou autres, les meilleurs résultats sont obtenus avec une inclinaison de la caméra telle que son axe optique soit incliné d'au moins 60° par rapport au plan perpendiculaire à l'axe de défilement.

De préférence, afin de détecter en une seule passe l'ensemble des défauts qui viennent d'être évoqués avec le maximum de sensibilité, le dispositif suivant l'invention comporte au moins deux caméras dont les axes optiques respectifs sont orientés l'un à pas plus de 30° et l'autre à pas moins de 60° par rapport à un plan perpendiculaire à l'axe de défilement.

Comme indiqué plus haut, on a intérêt à limiter le nombre des pixels dont on traite les valeurs "niv i" afin de standardiser et d'accélérer le traitement informatique. Si on limite par exemple N1 à 100 dans le cas d'une barrette de 256 pixels on prendra seulement 1 pixel sur 2 si l'image couvre 200 pixels. La largeur d'un pixel étant de environ 13 x 10$^{-6}$ m, il n'y a pas de perte sensible de précision de détection. On s'arrangera pour que selon la dimension des produits contrôlés, l'image couvre au moins 100 pixels dont, dans ce cas, toutes les valeurs "niv i" seront traitées.

La durée du temps d'exposition est choisie en fonction de l'éclairement des caméras, celle-ci variant, toute chose égale par ailleurs avec l'angle que fait l'axe optique de la caméra avec un plan perpendiculaire à l'axe de défilement. La durée du temps d'exposition varie également avec la vitesse de défilement du produit et la taille des défauts minimaux que l'on veut détecter.

Pour les applications du dispositif et du procédé à la détection des défauts sur des produits longs de révolution, on utilise de préférence deux groupes de caméras. Un premier groupe comporte, de préférence, quatre caméras linéaires CCD dont l'axe optique n'est pas incliné de plus qu'environ 30° par rapport au plan perpendiculaire à l'axe de défilement du produit. Avantageusement, cette inclinaison est limitée à environ 15. Ces quatre caméras sont réparties autour de l'axe de défilement à environ 90° les unes des autres, leurs axes optiques convergeant sur l'axe de défilement. Avantageusement, on choisit la distance focale et l'ouverture de façon à former sur la barrette de pixels l'image d'au moins un quart du périmètre du produit avec, de préférence, un certain recouvrement des bords des images obtenues par les caméras adjacentes.

On utilise avantageusement comme moyen d'éclairage, un tube fluorescent annulaire, un moyen d'éclairage complémentaire de même intensité étant éventuellement placé dans la zone des amenées de courant, si le tube fluorescent annulaire ne recouvre pas 360°. De préférence, le tube est alimenté en courant continu à tension stabilisée.

Le deuxième groupe comporte avantageusement six caméras dont les axes optiques sont inclinés par exemple à 80° par rapport au plan perpendiculaire à l'axe de défilement. Avantageusement là aussi, on choisira les caractéristiques optiques de façon à obtenir un certain recouvrement des zones visées par deux caméras adjacentes.

De préférence, les moyens d'éclairement et les deux groupes de caméras sont montés sur un support commun, mobile en hauteur pour ajuster la position de cet ensemble en fonction du diamètre du produit à contrôler et de la position en hauteur de l'axe de défilement. Le produit est de préférence entraîné horizontalement suivant l'axe de défilement, par au moins un rouleau muni d'un moyen moteur, le produit circulant ensuite, de préférence, sur des glissières. Un moyen de déplacement parallèle à l'axe de défilement permet d'ajuster la position du groupe de caméras inclinées à 80° pour que la zone observée renvoie le maximum d'éclairement en direction de ces caméras. Des moyens automatiques permettent avantageusement d'effectuer ces réglages sur simple affichage du diamètre des produits à contrôler. Avantageusement, ces moyens automatiques assurent le réglage et le contrôle de la vitesse de défilement du produit. Avantageusement, ces moyens automatiques sont aptes à recevoir d'un ou de plusieurs calculateurs, les informations sur les défauts détectés par au moins une caméra ainsi que, éventuellement les informations concernant les incidents de fonctionnement. Avantageusement, les moyens automatiques marquent les emplacements des défauts directement sous la forme de repères sur la paroi du produit en défilement.

On constate une réduction de l'intensité lumineuse réfléchie par les zones du périmètre du produit de révolution écartées de l'axe optique des caméras. Ceci est particulièrement sensible dans le cas des caméras dont l'axe optique est incliné de plus de 60° par rapport au plan perpendiculaire à l'axe de défilement. En effet, dans ce cas, la partie du périmètre du produit vue par chacune des barrettes linéaires de ces caméras a la forme d'un arc d'ellipse très accentué. On détermine facilement par le calcul ou l'expérience, les coefficients qu'il convient d'appliquer, de façon automatique par les moyens de traitement, pour corriger les lectures "niv i" effectuées sur les pixels en fonction de leur distance de l'axe optique, du degré d'inclinaison de cet axe et du grandissement de l'objectif. On peut ainsi détecter les défauts dans ces zones éloignées de l'axe optique avec une sensibilité comparable à celle obtenue au voisinage de cet axe optique.

Lorsque le produit à contrôler n'est pas de révolution, on introduit avantageusement comme dans le cas des produits de révolution traités ci-dessus quand cela s'avère nécessaire du fait de la forme du produit, une correction propre à chaque forme de produit des valeurs de "niv i" mesurées sur chacun des pixels éloignés de l'axe optique de

4

chaque caméra en fonction de l'écartement de ces pixels par rapport au milieu de la barrette. Cette correction peut être déterminée par le calcul ou par l'expérience.

Le traitement informatique proprement dit des signaux reçus par les barrettes linéaires de pixels des caméras du premier ou du deuxième groupe, qui permet de déterminer les valeurs de Cumul 1 et de P1 ou, de préférence, de Cumul 2 et de P2, est effectué par des moyens connus de l'homme de métier. On peut, par exemple, utiliser un ou plusieurs ordinateurs P.C. COMPAQ (marque déposée) 486 - 33 ou 50 MHz permettant de traiter chacun les signaux provenant d'un groupe de caméras et commandés chacun par une carte d'acquisition avec en plus des mémoires de stockage intermédiaires des données en provenance de chaque caméra.

Une telle carte comporte:

1) Un module de fabrication des signaux de synchronisation des caméras permettant de générer les horloges pixels et les horloges lignes. Les temps d'exposition, qui sont fonction de l'éclairement et de l'optique, peuvent être, par exemple de $600 \ 10^{-6}$ seconde pour les caméras inclinées à 15° et $1200 \ 10^{-6}$ seconde pour les caméras inclinées à 80°.

2) Un module de sélection de N1 pixels parmi les N pixels de la barrette. La fonction de ce module est de valider les N1 pixels, par exemple 100 pixels sur l'ensemble N des pixels de la barrette soit par exemple 256.

3) Un module de mise en forme des signaux de lecture qui rend compatibles les signaux de la carte et ceux du bus et permet d'accélérer les calculs en rassemblant deux pixels consécutifs sur une donnée de 16 bits ou de 32 bits.

Les mémoires de stockage intermédiaires sont avantageusement constituées de modules de mémorisation type FIFO (mémoire "first in-first out") que l'on interface avec les ordinateurs et avec la ou les cartes d'acquisition.

C'est à partir des signaux générés et mis en forme par la ou les cartes que les calculateurs déterminent les valeurs d'écart indiquées plus haut.

Les calculs sont effectués à la même vitesse que les expositions avec un décalage constant. Les valeurs P1 ou P2 sont comparées à la même fréquence que les expositions a des valeurs de seuil de défaut et la détection d'un défaut provoque l'intervention des moyens automatiques de marquage qui effectuent le marquage d'un repère directement sur la paroi du produit en défilement.

L'enregistrement de ces défauts dans des mémoires adaptés ou encore, au moyen d'une imprimante travaillant sur une bande, est également possible.

Le procédé et le dispositif suivant l'invention peuvent s'appliquer, de façon également avantageuse, à la détection de tous types de défauts de surface sur des bandes métalliques de largeurs plus ou moins importantes. On peut faire défiler une telle bande à la vitesse de, par exemple, 1 m/s et on contrôle l'état de surface au moyen d'au moins une caméra linéaire dont l'axe optique est orienté en direction d'au moins une des deux faces de la bande.

Suivant la largeur de bande on peut prévoir des caméras comportant une barrette de 256, 512 ou 1024 pixels. On peut aussi, si nécessaire, utiliser plusieurs caméras côte à côte. L'éclairage est avantageusement réalisé par un tube fluorescent droit orienté transversalement.

On utilise, comme dans le cas précédent, de préférence, au moins une caméra dont l'axe optique est incliné de pas plus que 30° par rapport au plan perpendiculaire à l'axe de défilement et au moins une caméra d'axe optique incliné à au moins 60°. On peut enfin contrôler simultanément les deux faces de la bande en disposant de chaque côté de celleci les caméras et les moyens d'éclairement nécessaires pour effectuer ce contrôle.

Bien que l'utilisation industrielle du dispositif et du procédé suivant l'invention soit particulièrement avantageuse pour le contrôle de tubes ou barres de révolution en métaux inoxydables ou réfractaires tels que les aciers inoxydables et d'autres métaux inoxydables ou réfractaires, ce procédé et ce dispositif peuvent s'appliquer à toutes sortes de produits longs en alliages ou métaux très divers ayant un profil de révolution ou non tels que barres de section carrée ou rectangulaire ou hexagonale ou encore à toutes sortes de profils, ou encore des bandes métalliques.

L'exemple et les figures ci-après décrivent, de façon non limitative, un mode particulier de réalisation du procédé et du dispositif suivant l'invention.

La figure 1 est une vue schématique en élévation de l'ensemble du dispositif suivant l'invention

La figure 2 est une vue schématique en élévation des moyens d'entraînement du produit long et de réglage des caméras du dispositif suivant l'invention.

La figure 3 est une vue schématique de face du groupe de 6 caméras inclinées à 80° et de l'effet de la correction angulaire suivant l'invention sur la détection des défauts.

La figure 4 est une vue schématique du mode de réglage de position des caméras dont l'axe optique fait un angle au moins égal à 60° par rapport au plan perpendiculaire à l'axe de défilement.

La figure 5 est un schéma synoptique d'une carte d'acquisition avec mémoire de type FIFO pour la mise en oeuvre du procédé suivant l'invention.

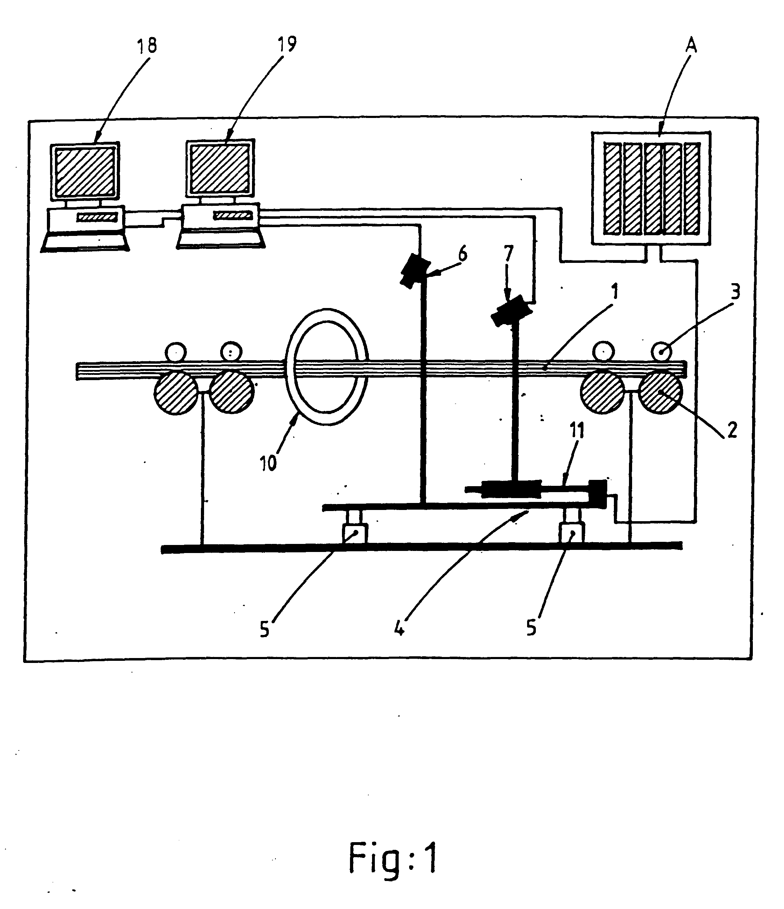

La figure 1 est une vue schématique en élévation du dispositif suivant l'invention permettant la mise en oeuvre du procédé d'inspection automatique, par vision artificielle, de produits longs tubulaires.

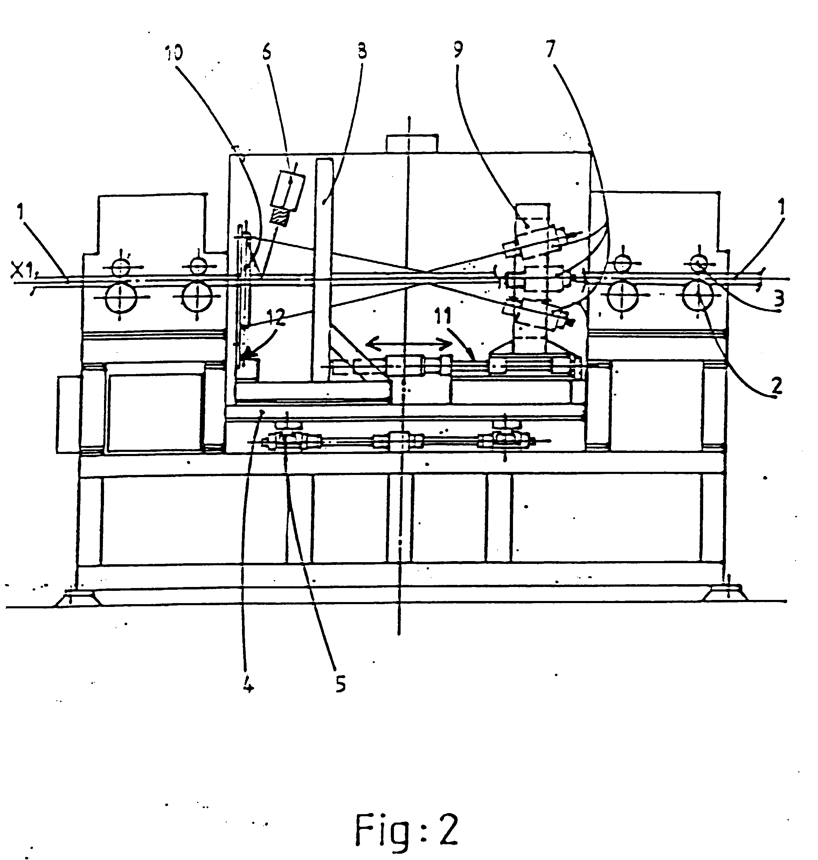

La figure 2 est une vue schématique également, en élévation qui représente plus précisément les moyens assurant le défilement des produits longs à contrôler et le réglage des moyens d'inspection. Comme le montre plus précisément la figure 2, le produit tubulaire 1 circule sur un axe de défilement X1-X1 entraîné par des galets tels que 2, 3 qui le maintiennent sur son axe et sont eux-mêmes entraînés en rotation par des moyens moteurs non représentés. Un plateau mobile verticalement 4 grâce à un moyen d'entraînement à vis sans fin 5 supporte deux groupes de caméras 6, 7 grâce à des moyens support 8, 9, indiqués de façon schématique et un moyen d'éclairement 10 du produit tubulaire.

Un groupe de quatre caméras linéaires CCD dont une seule 6 est représentée comporte des axes optiques inclinés de 15° par rapport à un plan perpendiculaire à l'axe de défilement. Un deuxième groupe de six caméras 7 dont une est représentée figure 1 et trois figure 2, comporte des axes optiques inclinés de 80° par rapport à un plan perpendiculaire à l'axe de défilement. Comme le montre la figure 2, ce groupe est monté sur un moyen support 9 apte à coulisser horizontalement en 11 grâce à des moyens d'entraînement non représentés. Le moyen d'éclairement de la surface du produit tubulaire est un tube fluorescent annulaire 10 centré sur l'axe de défilement et supporté par une pièce support 12 indiquée sur la figure 2.

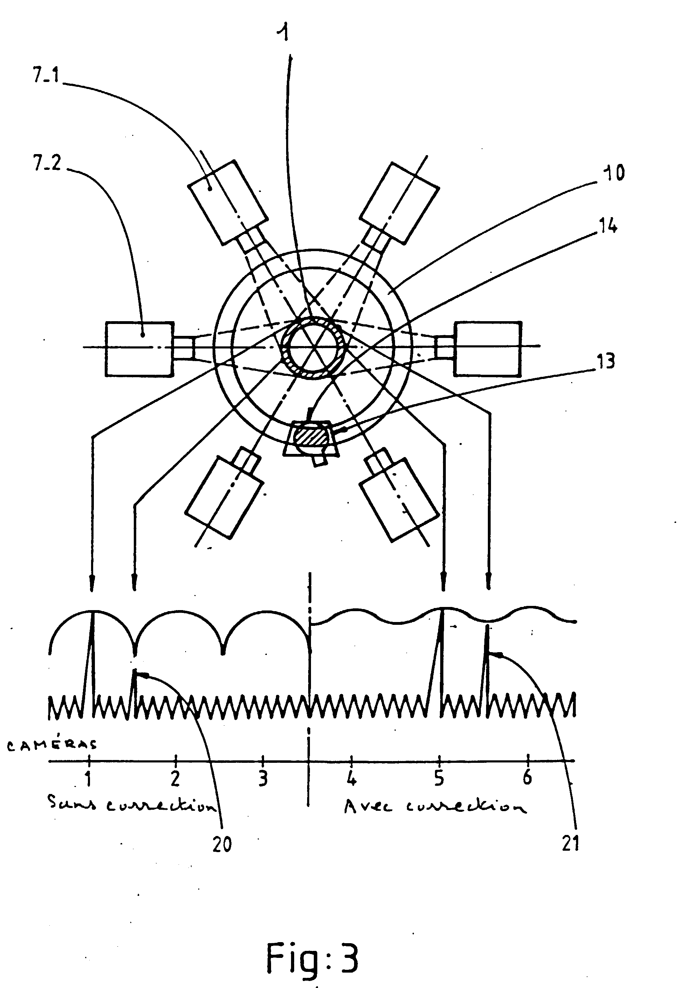

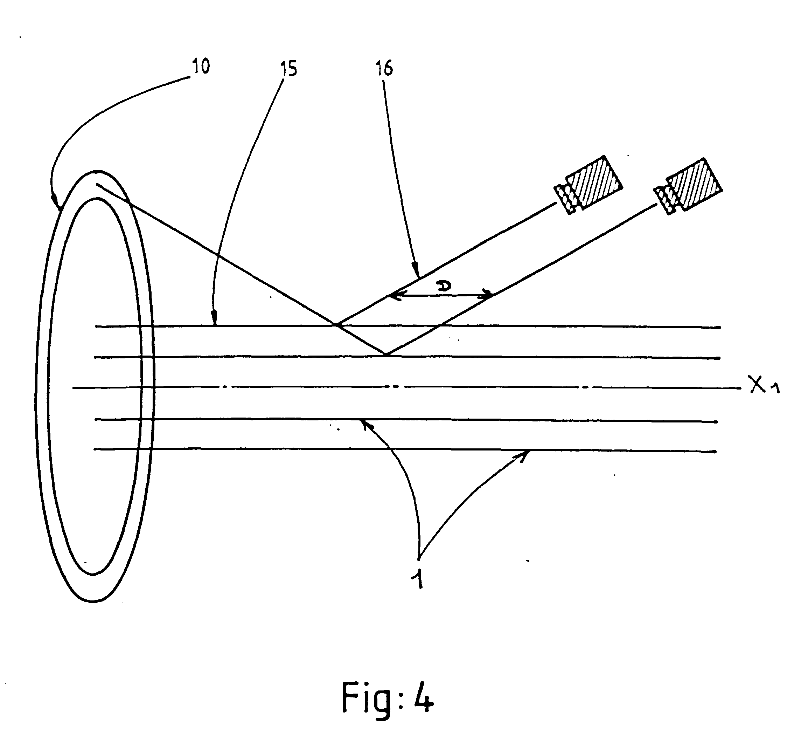

Comme le montre la figure 3, le tube annulaire présente une zone de branchement 13 non éclairante. On y remédie en plaçant à cet endroit une lampe opaline 14 ayant une intensité lumineuse voisine de celle du tube fluorescent. Le tube et la lampe sont alimentés en courant continu stabilisé. Lorsque le plateau mobile 4 est déplacé en hauteur pour tenir compte d'une variation de diamètre du produit tubulaire à contrôler donc de la position en hauteur de l'axe de défilement les galets 2 étant eux en position fixe dans l'exemple représenté, un déplacement horizontal tel que D (voir figure 4) doit être réalisé pour que l'angle à former par le rayon incident du tube fluorescent 10 qui coupe la génératrice 15 du produit tubulaire 1 au point d'intersection de l'axe optique 16 soit égal à l'angle que fait cet axe optique avec cette génératrice.

Un automate A effectue automatiquement ces réglages en hauteur et en translation horizontale, pour le groupe des 6 caméras, dès qu'on affiche le diamètre du produit tubulaire à contrôler. Comme cela a été dit dans la description générale, cet automate assure aussi le réglage et le contrôle de la vitesse de défilement du produit long.

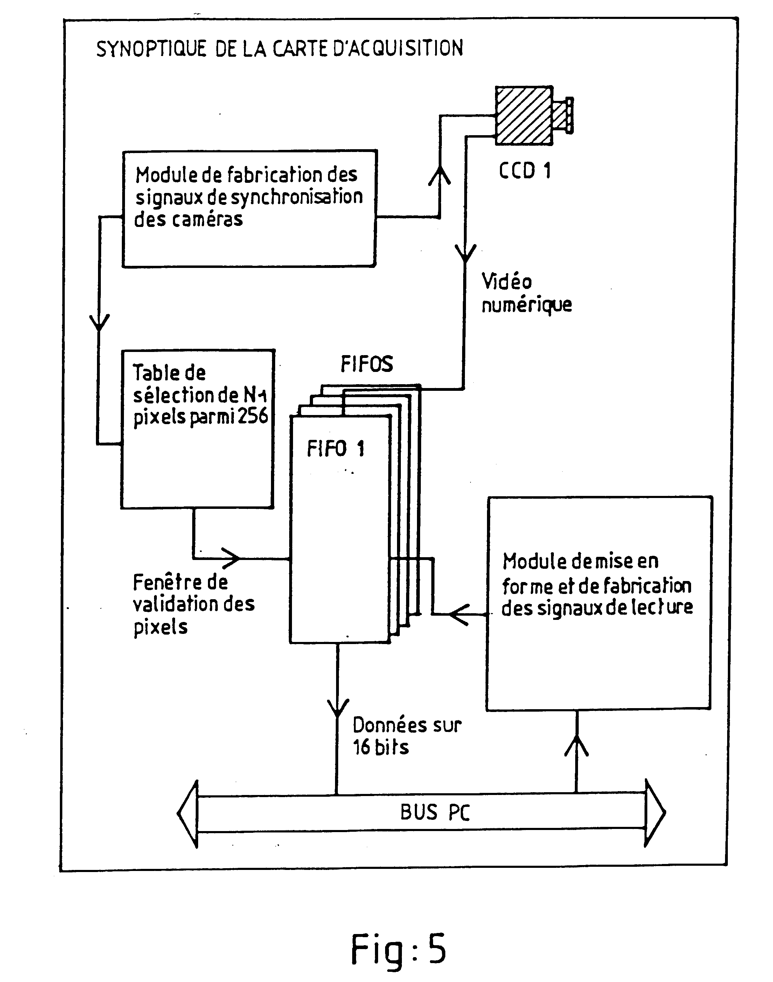

Comme cela a été également indiqué dans la description générale, on utilise dans le cas du dispositif et du procédé décrits dans le présent exemple des caméras linéaires CCD. Ces caméras comportent une barrette de 256 pixels de 3,33 mm de longueur. Afin d'accélérer et de standardiser le traitement informatique, on prélève 100 pixels sur lesquels est effectué ce traitement. On met en oeuvre pour réaliser le programme deux ordinateurs P.C. COMPAQ 486 - 33 MHz 18, 19. Chacun de ces ordinateurs est relié à un groupe de caméras par l'intermédiaire d'une carte d'acquisition et d'un module de mémorisation FIFO (figure 5). Les temps d'exposition sont de $600.10^{-6}$ s pour le groupe de 4 caméras et de $1200.10^{-6}$ s pour le groupe de 6 caméras. Comme indiqué également dans la description générale, les moyens de traitement appliquent de façon automatique des coefficients de correction aux lectures de "niv i" effectuées sur les pixels en fonction de leur distance de l'axe optique, du degré d'inclinaison de cet axe par rapport à un plan perpendiculaire à l'axe de défilement et du grandissement de l'objectif. On voit figure 3 un exemple de l'application de ces coefficients de correction sur l'amplitude des défauts détectés.

On voit qu'un défaut situé juste dans la zone éloignée des axes optiques de 2 caméras telle que 7.1, 7.2 est détecté en 20. En 21, un défaut analogue est amplifié par l'application du coefficient de correction angulaire, alors que, sans cette amplification, il n'était que peu visible.

Les calculs effectués au moyen des deux ordinateurs 18, 19 suivant le programme réalisé pour la mise en oeuvre du procédé suivant l'invention, permettent de déterminer d'une part les sommes des valeurs absolues des écarts des "niv i" pour les N1 pixels à deux temps d'exposition successifs tels que t1, t2: c'est la valeur Cumul 1. En retranchant deux valeurs de Cumul 1 successives, on obtient ainsi qu'expliqué antérieurement une valeur "P1" qu'on peut appeler "écart combiné en valeur absolue". Comme on va le voir, cette valeur P1 a l'inconvénient de présenter une dispersion importante et de n'être que peu significative.

La méthode développée à partir de celle-ci est, comme le montre l'exemple ci-après, bien plus efficace. On a tout d'abord constaté que, sur un produit tubulaire en acier inoxydable sans défaut visible, les lectures de "niv i" peuvent être ajustées par exemple, à une valeur moyenne d'environ 100 avec des variations qu'on appelle bruit de fond entre 70 et 130. Il y a donc intérêt à limiter les valeurs lues de "niv i" par un seuil au voisinage de 70 ou de 80 pour éliminer l'influence de ce bruit de fond. Ces valeurs de 70 et 80 sont les "seuils de gris" introduits dans la description générale de l'invention. Ceci effectué, on calcule les sommes des écarts algébriques c'est "Cumul 2" ainsi qu'expliqué antérieurement et, par différence de deux valeurs de Cumul 2 successives, on détermine la différence combinée P2.

Les trois tableaux ci-après montrent les résultats obtenus dans le cas de différents échantillons de tube en acier inoxydable au chrome nickel du type AISI 304.

Chacun de ces trois tableaux montre les valeurs de "niv i" mesurées sur une série consécutive de dix expositions aux temps $t_1$ à $t_{10}$ sur un groupe de 15 pixels prélevés dans les 100 pixels qui font l'objet du traitement informatique d'une barrette de 256 pixels. La caméra mise en oeuvre fait partie du groupe de 4 caméras inclinées à 15° pour l'observation des taches. Au-dessous des colonnes de 15 valeurs numériques "niv i" correspondant chacune à un pixel, sont indiquées successivement :

1) les valeurs de Cumul 1, somme des écarts absolus entre les valeurs "niv i" aux temps $t_2$-$t_1$, $t_3$-$t_2$, $t_4$-$t_3$ .... $t_{10}$-$t_9$.

2) la valeur de P1 différence entre 2 valeurs consécutives de Cumul 1, différence prise en valeur absolue.

3) la valeur de Cumul 2, somme des écarts en valeur algébrique de "niv i" aux temps $t_2$-$t_1$, $t_3$-$t_2$,....$t_{10}$-$t_9$ pour un "seuil de gris" de 80.

4) La valeur de P2 correspondante, différence entre 2 valeurs consécutives de Cumul 2 prise en valeur absolue.

5) La valeur de Cumul 2, somme des écarts en valeur algébrique de "niv i" aux temps $t_2$-$t_1$, $t_3$-$1_2$, ... $t_{10}$-$t_9$ pour un "seuil de gris" de 70.

6) La valeur de P2 correspondante, différence entre 2 valeurs consécutives de Cumul 2 prise en valeur absolue.

TABLEAU I

| t1 | t2 | t3 | t4 | t5 | t6 | t7 | t8 | t9 | t10 | Temps exposition |
|---|---|---|---|---|---|---|---|---|---|---|
| 101| | 79| | 88| | 103| | 130| | 79| | 114| | 82| | 100| | 76| | |
| 73| | 93| | 86| | 92| | 132| | 103| | 118| | 110| | 118| | 119| | |
| 121| | 77| | 108| | 88| | 90| | 128| | 102| | 94| | 107| | 119| | |
| 129| | 125| | 124| | 112| | 117| | 106| | 93| | 91| | 81| | 122| | |
| 95| | 98| | 132| | 76| | 81| | 130| | 116| | 94| | 119| | 117| | |
| 130| | 69| | 88| | 117| | 83| | 106| | 70| | 130| | 88| | 71| | |
| 96| | 127| | 105| | 75| | 105| | 84| | 100| | 83| | 99| | 94| | |
| 125| | 95| | 91| | 93| | 70| | 70| | 102| | 113| | 74| | 94| | |
| 110| | 84| | 90| | 83| | 87| | 87| | 126| | 70| | 110| | 94| | |
| 112| | 116| | 129| | 83| | 122| | 131| | 119| | 96| | 112| | 121| | |
| 78| | 86| | 76| | 124| | 117| | 81| | 77| | 87| | 120| | 82| | |
| 104| | 114| | 80| | 132| | 84| | 96| | 117| | 124| | 126| | 132| | |
| 93| | 96| | 76| | 97| | 83| | 132| | 110| | 107| | 83| | 97| | |
| 119| | 73| | 99| | 78| | 84| | 129| | 108| | 132| | 99| | 120| | |
| 116| | 92| | 99| | 102| | 74| | 106| | 90| | 77| | 119| | 114| | |
| | | | | | | | | | | |
| | 344| | 243| | 368| | 312| | 413| | 314| | 296| | 361| | 231| | Cumul1 |
| | | | 101| | 125| | 56| | 101| | 99| | 10| | 65| | 130| | P1 |
| | | | | | | | | | | |
| | -13| | 14| | -3| | -5| | 13| | -10| | 0| | 7| | -7| | Cumul2 |
| | | | 27| | 17| | 2| | 18| | 23| | 10| | 7| | 14| | P2 seuil = 80 |
| | | | | | | | | | | |
| | -1| | 1| | 0| | 0| | 0| | 0| | 0| | 0| | 0| | Cumul2 |
| | | | 2| | 1| | 0| | 0| | 0| | 0| | 0| | 0| | P2 seuil = 70 |

EP 0 574 336 B1

EP 0 574 336 B1

TABLEAU II

| t1 | t2 | t3 | t4 | t5 | t6 | t7 | t8 | t9 | t10 | Temps exposition |
|---|---|---|---|---|---|---|---|---|---|---|
| 101| | 79| | 88| | 103| | 130| | 79| | 114| | 82| | 100| | 76| | |
| 73| | 93| | 86| | 92| | 132| | 103| | 118| | 110| | 110| | 119| | |
| 121| | 77| | 108| | 88| | 90| | 128| | 102| | 94| | 107| | 119| | |
| 129| | 125| | 124| | 112| | 117| | 106| | 93| | 91| | 81| | 122| | |
| 95| | 90| | 132| | 76| | 81| | 130| | 116| | 94| | 119| | 117| | |
| 130| | 69| | 80| | 117| | 83| | 106| | 70| | 130| | 88| | 71| | |
| 68| | 83| | 72| | 57| | 72| | 62| | 70| | 61| | 69| | 67| | | |
| 82| | 67| | 65| | 66| | 55| | 59| | 71| | 76| | 57| | 67| | | Soudure |
| 79| | 62| | 65| | 61| | 63| | 63| | 83| | 55| | 75| | 67| | | |
| 112| | 116| | 129| | 83| | 122| | 131| | 119| | 96| | 112| | 121| | |
| 70| | 86| | 76| | 124| | 117| | 81| | 77| | 87| | 120| | 82| | |
| 104| | 114| | 80| | 132| | 84| | 96| | 117| | 124| | 126| | 132| | |
| 93| | 96| | 76| | 97| | 83| | 132| | 110| | 107| | 83| | 97| | |
| 119| | 73| | 99| | 78| | 84| | 129| | 108| | 132| | 99| | 120| | |
| 116| | 92| | 99| | 102| | 74| | 106| | 90| | 77| | 119| | 114| | |
| | 296| | 227| | 349| | 283| | 390| | 275| | 254| | 313| | 210| | Cumul1 |
| | 69| | 122| | 66| | 115| | 123| | 21| | 59| | 103| | p1 |
| | -31| | 7| | -16| | 6| | -1| | 25| | -19| | 12| | -13| | Cumul2 |
| | 38| | 23| | 22| | 7| | 26| | 44| | 31| | 25| | p2 seuil - 80 |
| | -10| | 2| | -16| | 4| | -4| | 26| | -24| | 10| | 5| | Cumul2 |
| | 12| | 10| | 20| | 0| | 30| | 50| | 34| | 5| | p2 seuil - 70 |

TABLEAU III

| temps exposition | t1 | t2 | t3 | t4 | t5 | t6 | t7 | t8 | t9 | t10 |
|---|---|---|---|---|---|---|---|---|---|---|
| | 10 | 79 | 80 | 103 | 130 | 79 | 114 | 82 | 100 | 76 |
| | 73 | 93 | 86 | 92 | 132 | 103 | 118 | 110 | 118 | 119 |
| | 121 | 77 | 108 | 83 | 90 | 128 | 102 | 94 | 107 | 119 |
| | 129 | 125 | 124 | 112 | 117 | 106 | 93 | 91 | 01 | 122 |
| | 95 | 90 | 132 | 76 | 01 | 130 | 116 | 94 | 119 | 117 |
| | 130 | 69 | 80 | 117 | 03 | 106 | 70 | 130 | 80 | 71 |
| | 60 | 83 | 72 | 57 | 72 | 62 | 70 | 61 | 69 | 67 |
| | 02 | 67 | 65 | 66 | 55 | 59 | 71 | 76 | 57 | 67 |
| | 79 | 62 | 65 | 61 | 63 | 63 | 83 | 55 | 75 | 67 |
| | 112 | 116 | 129 | 83 | 122 | 131 | 119 | 96 | 112 | 121 |
| | 70 | 06 | 76 | 124 | 117 | 01 | 77 | 87 | 120 | 82 |
| | 104 | 114 | 80 | 132 | 42 | 96 | 117 | 124 | 126 | 132 |
| | 93 | 96 | 76 | 97 | 11 | 132 | 110 | 107 | 03 | 97 |
| | 119 | 73 | 99 | 78 | 04 | 129 | 100 | 132 | 99 | 120 |
| | 116 | 92 | 99 | 102 | 74 | 106 | 90 | 77 | 119 | 114 |
| Cumul1 p1 | | 296 | 227 | 349 | 367 | 402 | 275 | 234 | 313 | 210 |
| | | | 69 | 122 | 10 | 115 | 207 | 21 | 59 | 103 |
| Cumul2 P2 seuil = 80 | | -31 | 7 | -16 | -71 | 76 | 25 | -19 | 12 | -13 |
| | | | 30 | 23 | 55 | 147 | 51 | 44 | 31 | 25 |
| Cumul2 P2 seuil = 70 | | -10 | 2 | -16 | -53 | 53 | 26 | -24 | 10 | 5 |
| | | | 12 | 10 | 37 | 106 | 27 | 50 | 34 | 5 |

Les valeurs de Cumul 2 et de P2 sont calculées pour deux valeurs de "seuil de gris" de 80 et de 70 pour mieux montrer l'incidence de l'elimination du bruit de fond.

Les résultats du tableau I qui correspond à une zone exemple de défauts montrent qu'il y a une dispersion des valeurs "niv i" due à la dispersion des conditions de réflexion de la lumière par une paroi métallique, même exempte de défauts. Dans le cas de ce tableau, les valeurs de "niv i" sont approximativement de $100 \pm 30$. Les valeurs de Cumul 1 et de P1 montrent cette dispersion. On remarque en particulier que P1 varie entre 18 et 125 malgré l'absence des taches.

Cette dispersion disparaît par introduction des seuils et des écarts algébriques. Pour un "seuil de gris" de 80, il ne reste plus qu'une faible dispersion des valeurs de Cumul 2 et de P2 et pour un "seuil de gris" de 70 cette dispersion disparaît complètement.

Le tableau II montre une zone sans défauts mais comportant une ligne longitudinale de soudure. Celle-ci est visible par une faible coloration qui abaisse les valeurs de "niv i" sur une largeur de 3 pixels. L'utilisation des "seuils de gris" de 80 et 70 et des écarts algébriques atténue considérablement la dispersion des valeurs de Cumul 2 et de P2. La ligne de soudure continue ne fait pas apparaitre de discontinuité dans les valeurs de P2.

Le tableau III montre une zone comportant comme le tableau II une soudure longitudinale et en plus un défaut de surface localisé (tache). Cette fois-ci, la zone de tache qui est entourée sur le tableau est visible par les faibles valeurs de "niv i" au temps d'exposition $t_5$ et est particulièrement bien observée au niveau des valeurs P2.

Il apparait par les résultats de ces 3 exemples que la méthode de traitement des valeurs de "niv i" ainsi décrite permet de faire apparaître clairement les zones de défauts localisés des produits longs tout en éliminant l'incidence sur la méthode de mesure de zones continues longitudinales telles que la zone de soudure. Il suffit de choisir un "seuil de défaut" S associé à chaque "seuil de gris" et de comparer les valeurs obtenues pour P2 à S : si P2 > S le tube contrôlé sera considéré comme présentant un défaut.

S sera choisi après étalonnage de la méthode et des équipements utilisés.

Dans les exemples proposés aux tableaux I, II et III, on pourra par exemple prendre comme seuil de défaut :
S = 60 pour "seuil de gris" = 80
S = 55 pour "seuil de gris" = 70

Ces défauts sont ensuite repérés sur les produits et/ou sont enregistrés de façon à réaliser un contrôle efficace sur toute la longueur du produit.

Des contrôles analogues sont faits au moyen des caméras dont les axes optiques sont inclinés à 80° pour la recherche des rayures, fissures ou autres dénivellations. Ici aussi, les mesures de Cumul 2 et de P2 sont particulièrement significatives.

Comme indiqué précédemment, le dispositif et le procédé suivant l'invention peuvent être appliqués à la détection de tous types de défauts de surface sur des bandes et toutes sortes de profilés.

De très nombreuses modifications peuvent être apportées au procédé et au dispositif qui font l'objet de l'invention sans sortir du domaine de celle-ci.

On peut, en particulier, au lieu d'effectuer le traitement des valeurs de "niv i" et de Cumul 1, P1 et de Cumul 2, P2 sur un ensemble de N1 pixels, diviser ces N1 pixels en plusieurs zones successives ou se recouvrant partiellement de N2 pixels chacune et effectuer le traitement des valeurs de "niv i", Cumul 1, P1 et Cumul 2, P2 séparément sur ces zones de N2 pixels.

On travaille ainsi sur des zones plus petites et plus nombreuses et ceci permet, en particulier dans les cas où la réflexité du produit est irrégulière, sans pour autant que cela corresponde à des défauts de surface proprement dits, d'obtenir une plus grande sensibilité et de mieux éliminer le bruit de fond.

On peut également mettre en oeuvre le procédé suivant l'invention en utilisant, à la place d'une caméra CCD linéaire comportant une seule barrette, une caméra CCD matricielle comportant plusieurs lignes de barrettes parallèles. Dans la mesure ou les informations extraites de ces lignes de barrettes sont exploitées comme dans la présente invention ligne par ligne, on considérera alors la caméra CCD matricielle comme une caméra CCD linéaire, une telle caméra matricielle rentrant alors dans le cadre de la présente invention.

## Revendications

1. Procédé de détection de défauts de surface sur produits longs, métalliques, défilant suivant un axe, dans lequel on met en oeuvre au moins une caméra linéaire (6, 7) de type CCD, comportant une barrette formée d'une ligne de N pixels tels que $i_1, i_2, i_3....i_n$, orientée transversalement par rapport à l'axe de défilement du produit long, cette caméra étant munie d'une optique adaptée permettant de viser une zone de la surface du produit, éclairée par un moyen convenable (10), de façon à former une image de cette zone sur la barrette, un moyen d'entraînement (2, 3) permettant de faire défiler le produit suivant son axe à une vitesse déterminée, des moyens d'acquisition et de traitement informatique (18, 19) étant reliés à la caméra, caractérisé en ce que les moyens d'acquisition et de traitement informatique permettent, à des intervalles d'exposition successifs égaux $t_1, t_2, t_3....t_n$, de mesurer des valeurs numériques "niv i" correspondant aux quantités de lumière reçues par chaque pixel $i_1, i_2, i_3...i_{N1}$ d'un ensemble de N1 pixels choisis parmi les N pixels de la barrette avec N1 < N, puis de calculer les écarts de niveau entre ces valeurs numériques pour chaque pixel i à deux temps successifs d'exposition tels que $t_1, t_2$, puis de

déterminer la somme de ces écarts pour l'ensemble des N1 pixels, l'évolution de la valeur de cette somme le long du produit permettant de détecter l'apparition ou la disparition de défauts.

2. Procédé suivant la revendication 1 caractérisé en ce que la somme des écarts des niveaux de chaque pixel "niv i" pour l'ensemble de N1 pixels d'une barrette, niveaux mesurés à deux temps successifs d'exposition, est la valeur Cumul 1 correspondant à la somme des valeurs absolues de ces écarts.

3. Procédé suivant la revendication 1 caractérisé en ce que la valeur numérique "niv i" de chaque pixel est limitée à une valeur de seuil, dite "seuil de gris", toutes les valeurs supérieures déterminées à partir des quantités de lumière reçues par un quelconque pixel étant automatiquement abaissées à cette valeur de seuil pour les calculs d'écarts.

4. Procédé suivant la revendication 3 caractérisé en ce que la somme des écarts des niveaux de chaque pixel "niv i" pour l'ensemble de N1 pixels d'une barrette, à deux temps successifs, est la valeur Cumul 2 correspondant à la somme des valeurs algébriques de ces écarts.

5. Procédé suivant la revendication 3 caractérisé en ce que le "seuil de gris" est limité à environ 70 à 80 % de la valeur moyenne des "niv i" pour les zones des tubes exemptes de taches et de défauts.

6. Procédé suivant la revendication 2 caractérisé en ce qu'on détermine à partir des valeurs de cumul 1 calculées à des temps successifs $t_1, t_2, t_3$... une valeur d'écart combiné P1 prise en valeur absolue telle que

$$P1 = \left| Cumul\ 1\ (t_3 - t_2) - Cumul\ 1\ (t_2 - t_1) \right|,$$

l'évolution de cette valeur d'écart combiné P1 permettant de détecter l'apparition ou la disparition de défauts.

7. Procédé suivant l'une des revendications 3 à 5 caractérisé en ce qu'on détermine, à partir des valeurs de Cumul 2 successives, calculées à des temps $t_1, t_2, t_3$.... une valeur d'écart combiné P2 prise en valeur absolue telle que

$$P2 = \left| Cumul\ 2\ (t_3 - t_2) - Cumul\ 2\ (t_2 - t_1) \right|,$$

l'évolution de cette valeur d'écart combiné P2, permettant de détecter l'apparition ou la disparition de défauts.

8. Procédé suivant l'une des revendications 1 à 7 caractérisé en ce qu'on met en oeuvre au moins une caméra linéaire CCD (6) dont on oriente l'axe optique pour qu'il ne fasse pas un angle supérieur à environ 30° par rapport à un plan perpendiculaire à l'axe de défilement.

9. Procédé suivant l'une des revendications 1 à 8 caractérisé en ce qu'on met en oeuvre au moins une caméra linéaire CCD (7) dont on oriente l'axe optique pour qu'il ne fasse pas un angle inférieur à environ 60° par rapport à un plan perpendiculaire à l'axe de défilement.

10. Procédé suivant l'une des revendications 1 à 9 caractérisé en ce que l'éclairement de la zone visée par au moins une caméra est effectué par au moins une source lumineuse (10) alimentée en courant continu à tension stabilisée.

11. Procédé suivant l'une des revendications 1 à 10 caractérisé en ce que lorsque le produit long est un produit de révolution, on dispose au moins quatre caméras linéaires CCD (6) réparties autour de l'axe de défilement ayant chacune un axe optique incliné de moins de 30° par rapport à un plan perpendiculaire à l'axe de défilement et au moins six caméras linéaires CCD (7) réparties autour de l'axe de défilement ayant chacune un axe optique incliné d'au moins 60° par rapport à un plan perpendiculaire à l'axe de défilement.

12. Procédé suivant l'une des revendications 1 à 11 caractérisé en ce qu'on détermine le nombre de N1 pixels de façon à permettre le traitement informatique des N1 valeurs numériques pendant le temps d'une exposition et en ce que, dans le cas de produits de largeur relativement élevée, on répartit les N1 pixels sur la largeur de la zone de la barrette de pixels occupée par l'image, les autres pixels qu'ils se trouvent ou non dans la zone image n'étant pas traités.

13. Procédé suivant l'une des revendications 1 à 12 caractérisé en ce que, dans le cas de l'utilisation d'au moins une caméra (7) dont l'axe optique est incliné d'un angle pas inférieur à 60° par rapport à un plan perpendiculaire à l'axe de défilement, on accroît le temps d'exposition en fonction de la diminution de l'intensité d'éclairement de la barrette de pixels et de ses caractéristiques optiques par rapport au cas d'une caméra (6) dont l'axe optique fait un angle inférieur avec ce plan perpendiculaire à l'axe de défilement.

14. Procédé suivant l'une des revendications 1 à 13 caractérisé en ce qu'une correction des valeurs numériques "niv i" mesurées sur chacun des pixels éloignés de l'axe optique de chaque caméra (6, 7) est effectuée en fonction de l'écartement de ces pixels par rapport au milieu de la barrette.

15. Procédé suivant la revendication 14 caractérisé en ce que, dans le cas de la détection de défauts sur des produits de révolution (1), une correction des valeurs numériques "niv mesurées sur chacun des pixels éloignés de l'axe optique de chaque caméra (6, 7) est effectuée en fonction de l'écartement de ces pixels par rapport au milieu de la barrette, du diamètre du produit de révolution, du grandissement de l'objectif ainsi que de l'inclinaison de l'axe optique de la caméra par rapport au plan perpendiculaire à l'axe de défilement pour compenser la quantité moindre de lumière reçue par ces pixels.

16. Procédé suivant l'une des revendications 1 à 15 caractérisé en ce qu'on divise les N1 pixels en plusieurs zones successives ou se recouvrant partiellement de N2 pixels chacune et que l'on effectue le traitement des valeurs de "niv i", Cumul 1, P1, Cumul 2, P2 séparément sur chaque zone de N2 pixels.

17. Dispositif permettant la détection de défauts de surface sur un produit long métallique de révolution (1) et notamment sur des tubes de révolution, apte à défiler suivant son axe dans lequel on met en oeuvre plusieurs caméras linéaires CCD (6, 7) comportant chacune une barrette formée d'une ligne de N pixels orientée transversalement par rapport à l'axe de défilement, une optique adaptée permettant de former sur la barrette de pixels une image d'une zone de la surface du produit, un moyen d'éclairement (10) permettant d'éclairer cette zone, un moyen d'entraînement et de guidage (2, 3) permettant de faire défiler le produit suivant l'axe de défilement, un moyen de fabrication de signaux de synchronisation pour générer les horloges pixels et les horloges lignes de la caméra afin de déterminer les temps d'exposition de celle-ci, un moyen de mémorisation permettant le stockage des informations et des moyens de traitement (18, 19) de ces informations caractérisé en ce qu'il comporte un premier groupe de caméras CCD (6) réparties autour de l'axe de défilement dont l'axe optique est incliné de pas plus que 30° par rapport à un plan perpendiculaire à cet axe de défilement et un deuxième groupe de caméras CCD (7) réparties autour de l'axe de défilement et dont l'axe optique fait un angle au moins égal à 60° par rapport à un plan perpendiculaire à l'axe de défilement et en ce que les moyens de traitement de l'information (18, 19) comportent des moyens permettant pour chaque caméra CCD le calcul des écarts cumulés entre les niveaux des valeurs numériques des éclairements reçus par les pixels aux temps successifs d'exposition, chaque écart étant pris en valeur algébrique ou en valeur absolue pour le calcul des écarts cumulés.

18. Dispositif suivant revendication 17 caractérisé en ce que le premier groupe de caméras CCD (6) en comprend quatre réparties autour de l'axe de défilement et le deuxième groupe (7) en comprend au moins six réparties autour de l'axe de défilement.

19. Dispositif suivant revendication 17 ou 18 caractérisé en ce que des moyens de marquage permettent de repérer les écarts correspondant à des défauts le long du produit en défilement.

20. Dispositif suivant l'une des revendications 17 à 19 caractérisé en ce que le moyen d'éclairement de la paroi du produit de révolution est un tube fluorescent annulaire (10).

21. Dispositif suivant l'une des revendications 17 à 20 caractérisé en ce qu'en vue de permettre le contrôle de produits (1) de diamètres différents, l'ensemble comprenant le moyen d'éclairement annulaire et les deux groupes de caméras est solidaire d'une plateforme déplaçable (4) verticalement grâce à un moyen moteur.

22. Dispositif suivant l'une des revendications 17 à 21 caractérisé en ce qu'un moyen de déplacement (11) parallèlement à l'axe de défilement du groupe de caméras (7) d'axe optique incliné à au moins 60° par rapport à un plan perpendiculaire à l'axe de défilement est relié à la plateforme déplaçable verticalement (4) afin d'obtenir le maximum d'éclairement pour chaque diamètre de produit (1).

23. Dispositif suivant l'une des revendications 17 à 22 caractérisé en ce que le moyen d'entraînement du produit de révolution (1) le long de l'axe de défilement est constitué de galets (2, 3) motorisés.

**Patentansprüche**

1. Verfahren zur Erfassung von Oberflächenfehlern auf langen, metallischen Produkten, die entlang einer Achse befördert werden, bei dem mindestens eine lineare Kamera (6, 7) des Typs CCD, die eine von einer Reihe von N Pixel $i_1$, $i_2$, $i_3$, ... $i_N$ gebildete Leiste enthält, die in Bezug auf die Förderachse des langen Produkts quer ausgerichtet ist, wobei diese Kamera mit einer angepaßten Optik ausgestattet ist, die es ermöglicht, eine Zone der Oberfläche des Produkts zu untersuchen, die von einem geeigneten Mittel (10) beleuchtet wird, um auf der Leiste ein Bild dieser Zone zu erzeugen, ein Fördermittel (2, 3), das es ermöglicht, das Produkt entlang seiner Achse mit einer bestimmten Geschwindigkeit zu befördern, und Mittel zur Erfassung und zur Datenverarbeitung (18, 19) verwendet werden, die mit der Kamera verbunden sind, dadurch gekennzeichnet, daß die Mittel zur Erfassung und zur Datenverarbeitung es in aufeinanderfolgenden, gleichen Beleuchtungsintervallen $t_1$, $t_2$, $t_3$, ... $t_n$ ermöglichen, digitale Werte "niv i" zu messen, die den Lichtmengen entsprechen, die von jedem Pixel $i_1$, $i_2$, $i_3$, ... $i_{N1}$ einer Gruppe von N1 Pixeln empfangen werden, die aus den N Pixeln der Leiste ausgewählt werden, mit N1 < N, und dann die Pegelabstände zwischen diesen digitalen Werten für jedes Pixel i zu zwei aufeinanderfolgenden Beleuchtungszeitpunkten wie $t_1$, $t_2$ zu berechnen, und dann die Summe dieser Abstände für die Gesamtheit der N1 Pixel zu bestimmen, wobei die Entwicklung des Werts dieser Summe entlang des Produkts es ermöglicht, das Auftauchen oder das Verschwinden von Fehlern zu erfassen.

2. Verfahren nach Anspruch 1, dadurch gekennzeichnet, daß die Summe der Abstände der Pegel jedes Pixels "niv i" für die Gesamtheit der N1 Pixel einer Leiste der Wert Cumul 1 ist, der der Summe der Absolutwerte dieser Abstände entspricht, wobei diese Pegel in zwei aufeinanderfolgenden Beleuchtungszeitpunkten gemessen werden,.

3. Verfahren nach Anspruch 1, dadurch gekennzeichnet, daß der digitale Wert "niv i" jedes Pixels auf einen Schwellenwert begrenzt ist, der "Grauschwelle" genannt wird, wobei alle höheren Werte, die ausgehend von den von einem beliebigen Pixel empfangenen Lichtmengen bestimmt werden, für die Abstandsberechnungen automatisch auf diesen Schwellenwert abgesenkt werden.

4. Verfahren nach Anspruch 3, dadurch gekennzeichnet, daß die Summe der Abstände der Pegel jedes Pixels "niv i" für die Gesamtheit der N1 Pixel einer Leiste in zwei aufeinanderfolgenden Zeitpunkten der Wert Cumul 2 ist, der der Summe der algebraischen Werte dieser Abstände entspricht.

5. Verfahren nach Anspruch 3, dadurch gekennzeichnet, daß die "Grauschwelle" auf etwa 70 bis 80% des Mittelwerts der "niv i" für die Zonen von Rohren begrenzt ist, die keine Flecken und Fehler aufweisen.

6. Verfahren nach Anspruch 2, dadurch gekennzeichnet, daß man ausgehend von den Werten von Cumul 1, die in aufeinanderfolgenden Zeitpunkten $t_1$, $t_2$, $t_3$, ... berechnet wurden, einen kombinierten Abstandswert P1 bestimmt, der als Absolutwert genommen wird, also

$$P1 = \left| \text{Cumul } 1_{(t3-t2)} - \text{Cumul } 1_{(t2-t1)} \right|$$

wobei die Entwicklung dieses kombinierten Abstandswerts P1 es ermöglicht, das Auftauchen oder Verschwinden von Fehlern zu erfassen.

7. Verfahren nach einem der Ansprüche 3 bis 5, dadurch gekennzeichnet, daß man ausgehend von den aufeinanderfolgenden Werten von Cumul 2, die in Zeitpunkten $t_1$, $t_2$, $t_3$, ... berechnet werden, einen kombinierten Abstandswert P2 bestimmt, der als Absolutwert genommen wird, also

$$P2 = \left| \text{Cumul } 2_{(t3-t2)} - \text{Cumul } 2_{(t2-t1)} \right|$$

wobei die Entwicklung dieses kombinierten Abstandswerts P2 es ermöglicht, das Auftauchen oder Verschwinden von Fehlern zu erfassen.

8. Verfahren nach einem der Ansprüche 1 bis 7, dadurch gekennzeichnet, daß mindestens eine lineare CCD-Kamera (6) verwendet wird, deren optische Achse man so ausrichtet, daß sie keinen größeren Winkel als etwa 30° in Bezug auf eine zur Förderachse senkrechte Ebene bildet.

9. Verfahren nach einem der Ansprüche 1 bis 8, dadurch gekennzeichnet, daß mindestens eine lineare CCD-Kamera (7) verwendet wird, deren optische Achse so ausgerichtet wird, daß sie keinen kleineren Winkel als etwa 60° in Bezug auf eine zur Förderachse senkrechte Ebene bildet.

10. Verfahren nach einem der Ansprüche 1 bis 9, dadurch gekennzeichnet, daß die Beleuchtung der von mindestens einer Kamera untersuchten Zone durch mindestens eine Lichtquelle (10) erfolgt, die mit Gleichstrom und stabilisierter Spannung gespeist wird.

11. Verfahren nach einem der Ansprüche 1 bis 10, dadurch gekennzeichnet, daß, wenn das lange Produkt ein drehsymmetrisches Produkt ist, mindestens vier lineare CCD-Kameras (6) um die Förderachse herum verteilt angeordnet werden, die je eine optische Achse aufweisen, die um weniger als 30° in Bezug auf eine zur Förderachse senkrechte Ebene geneigt ist, und mindestens sechs lineare CCD-Kameras (7) um die Förderachse herum verteilt angeordnet werden, die je eine optische Achse aufweisen, die um mindestens 60° in Bezug auf eine zur Förderachse senkrechte Ebene geneigt ist.

12. Verfahren nach einem der Ansprüche 1 bis 11, dadurch gekennzeichnet, daß die Anzahl von N1 Pixeln so bestimmt wird, daß die Datenverarbeitung der NI digitalen Werte während der Zeit einer Beleuchtung ermöglicht wird, und daß bei Produkten relativ großer Breite die N1 Pixel über die vom Bild besetzte Breite der Zone der Leiste von Pixeln verteilt werden, während die anderen Pixel nicht verarbeitet werden, unabhängig davon, ob sie sich in der Bildzone befinden oder nicht.

13. Verfahren nach einem der Ansprüche 1 bis 12, dadurch gekennzeichnet, daß bei Verwendung mindestens einer Kamera (7), deren optische Achse um einen Winkel von nicht weniger als 60° in Bezug auf eine zur Förderachse senkrechte Ebene geneigt ist, die Beleuchtungszeit in Abhängigkeit von der Verringerung der Intensität der Beleuchtung der Leiste von Pixeln und ihrer optischen Eigenschaften im Vergleich mit einer Kamera (6) erhöht wird, deren optische Achse einen geringeren Winkel mit dieser zur Förderachse senkrechten Ebene bildet.

14. Verfahren nach einem der Ansprüche 1 bis 13, dadurch gekennzeichnet, daß eine Korrektur der digitalen Werte "niv i", die an jedem der von der optischen Achse jeder Kamera (6, 7) entfernten Pixel gemessen werden, in Abhängigkeit vom Abstand dieser Pixel von der Mitte der Leiste durchgeführt wird.

15. Verfahren nach Anspruch 14, dadurch gekennzeichnet, daß im Fall der Erfassung von Fehlern bei drehsymmetrischen Produkten (1) eine Korrektur der an jedem der von der optischen Achse jeder Kamera (6, 7) entfernten Pixel gemessenen Werte in Abhängigkeit vom Abstand dieser Pixel von der Mitte der Leiste, vom Durchmesser des drehsymmetrischen Produkts, von der Vergrößerung des Objektivs sowie von der Neigung der optischen Achse der Kamera in Bezug auf die zur Förderachse senkrechte Ebene durchgeführt wird, um die von diesen Pixeln empfangene, geringere Lichtmenge zu kompensieren.

16. Verfahren nach einem der Ansprüche 1 bis 15, dadurch gekennzeichnet, daß die N1 Pixel in mehrere aufeinanderfolgende oder sich teilweise überdeckende Zonen von N2 Pixeln aufgeteilt werden, und daß die Verarbeitung der Werte von "niv i", Cumul 1, P1, Cumul 2, P2 getrennt in jeder Zone der N2 Pixel durchgeführt wird.

17. Vorrichtung zur Erfassung von Oberflächenfehlern auf einem langen, metallischen, drehsymmetrischen Produkt (1) und insbesondere auf drehsymmetrischen Rohren, das entlang seiner Achse befördert werden kann, mit mehreren linearen CCD-Kameras (6, 7), die je eine Leiste aufweisen, die aus einer Reihe von N Pixeln geformt und in Bezug auf die Förderachse quer angeordnet ist, mit einer angepaßten Optik, die es ermöglicht, auf der Leiste von Pixeln ein Bild einer Zone der Oberfläche des Produkts zu erzeugen, mit einem Beleuchtungsmittel (10), das es ermöglicht, diese Zone zu beleuchten, mit einem Förder- und Führungsmittel (2, 3), das es erlaubt, das Produkt entlang der Förderachse zu befördern, mit einem Mittel zur Erzeugung von Synchronisationssignalen, um die Pixeltakte und die Zeilentakte der Kamera zu erzeugen, damit die Beleuchtungszeit dieser Kamera bestimmt wird, mit einem Speichermittel, das die Speicherung der Informationen erlaubt, und mit Verarbeitungsmitteln (18, 19) für diese Informationen, dadurch gekennzeichnet, daß sie eine erste Gruppe von um die Förderachse herum verteilten CCD-Kameras (6), deren optische Achse um nicht mehr als 30° in Bezug auf eine Ebene senkrecht zu dieser Achse geneigt ist, und eine zweite Gruppe von um die Förderachse herum verteilten CCD-Kameras (7) aufweist, deren optische Achse einen Winkel von mindestens 60° in Bezug auf eine zur Förderachse senkrechte Ebene bildet, und daß die Informations-Verarbeitungsmittel (18, 19) Mittel aufweisen, die jeder CCD-Kamera die Berechnung der kumulierten Abstände zwischen den Pegeln der digitalen Werte der Beleuchtungen erlauben, die von den Pixeln in den aufeinanderfolgenden Beleuchtungszeitpunkten empfangen werden, wobei jeder Abstand als algebraischer Wert oder als Absolutwert für die Berechnung der kumulierten Abstände genommen wird.

**18.** Vorrichtung nach Anspruch 17, dadurch gekennzeichnet, daß die erste Gruppe von CCD-Kameras (6) vier solche um die Förderachse herum verteilte Kameras und die zweite Gruppe (7) mindestens sechs um die Förderachse herum verteilte Kameras aufweist.

**19.** Vorrichtung nach Anspruch 17 oder 18, dadurch gekennzeichnet, daß Markierungsmittel es ermöglichen, die Fehlern entsprechenden Abstände entlang des durchlaufenden Produkts zu lokalisieren.

**20.** Vorrichtung nach einem der Ansprüche 17 bis 19, dadurch gekennzeichnet, daß das Mittel zur Beleuchtung der Wand des drehsymmetrischen Produkts eine ringförmige Leuchtstoffröhre (10) ist.

**21.** Vorrichtung nach einem der Ansprüche 17 bis 20, dadurch gekennzeichnet, daß zur Kontrolle von Produkten (1) unterschiedlicher Durchmesser die das ringförmige Beleuchtungsmittel und die beiden Gruppen von Kameras enthaltende Einheit fest mit einer Plattform (4) verbunden ist, die mit Hilfe eines Fördermittels senkrecht verschiebbar ist.

**22.** Vorrichtung nach einem der Ansprüche 17 bis 21, dadurch gekennzeichnet, daß ein Mittel (11) zur parallel zur Förderachse verlaufenden Verschiebung der Gruppe von Kameras (7), deren optische Achse um mindestens 60° in Bezug auf eine zur Förderachse senkrechten Ebene geneigt ist, mit der senkrecht verschiebbaren Plattform (4) verbunden ist, um die größtmögliche Beleuchtung für jeden Durchmesser des Produkts (1) zu erhalten.

**23.** Vorrichtung nach einem der Ansprüche 17 bis 22, dadurch gekennzeichnet, daß das Antriebsmittel für das drehsymmetrische Produkt (1) entlang der Förderachse aus angetriebenen Laufrollen (2, 3) besteht.

## Claims

**1.** A process for the detection of surface defects on long metallic products which move along an axis, wherein at least one linear camera (6, 7) of CCD type is used, comprising a bar formed by a line of N pixels such as $i_1$, $i_2$, $i_3$, ... $i_n$, which is oriented transversely with respect to the axis of movement of the long product, said camera being provided with a suitable optical means for viewing a region of the surface of the product, which is lit by a suitable means (10) so as to form an image of said region on the bar of pixels, an entrainment means (2, 3) permitting the product to be moved along its axis of movement at a given speed, data acquisition and processing means (18, 19) being connected to the camera, characterised in that the data acquisition and processing means permit measurement at equal successive exposure intervals $t_1$, $t_2$, $t_3$, ... $t_n$ of the numerical values "niv i" corresponding to the amounts of light which are received by each pixel $i_1$, $i_2$, $i_3$ ... $i_{N1}$ of an assembly of N1 pixels selected from the N pixels of the bar with N1 < N, then calculation of the differences in level between said numerical values for each pixel i at two successive exposure times such as $t_1$, $t_2$, then determination of the sum of said differences for all the N1 pixels, the variation in the value of said sum along the product permitting the appearance or the disappearance of defects to be detected.

**2.** A process according to claim 1 characterised in that the sum of the differences in the levels of each pixel "niv i" for the assembly of N1 pixels of a bar, which levels are measured at two successive exposure times, is the value cumulative total 1 corresponding to the sum of the absolute values of said differences.

**3.** A process according to claim 1 characterised in that the numerical value "niv i" of each pixel is limited to a threshold value, referred to as the "grey threshold", all the higher values determined on the basis of the amounts of light which are received by any pixel being automatically reduced to that threshold value for the calculations of differences.

**4.** A process according to claim 3 characterised in that the sum of the differences in the levels of each pixel "niv i" for the assembly of N1 pixels of a bar, at two successive times, is the value cumulative total 2 corresponding to the sum of the algebraic values of said differences.

**5.** A process according to claim 3 characterised in that the "grey threshold" is limited to about 70 to 80% of the mean value of the values "niv i" for the regions of the tubes which are free from stains and defects.

6.  A process according to claim 2 characterised in that, on the basis of the values of cumulative total 1 which are calculated at successive times $t_1$, $t_2$, $t_3$ ..., there is determined a combined difference value P1 taken in terms of absolute value such that:

$$P1 = \left| \text{cumulative total 1 } (t_3\text{-}t_2) - \text{cumulative total 1 } (t_2\text{-}t_1) \right|,$$

the variation in said combined difference value P1 permitting the appearance or disappearance of defects to be detected.

7.  A process according to one of claims 3 to 5 characterised in that, on the basis of the successive values of cumulative total 2 which are calculated at times $t_1$, $t_2$, $t_3$ ..., there is determined a combined difference value P2 taken in terms of absolute value such that:

$$P2 = \left| \text{cumulative total 2 } (t_3\text{-}t_2) - \text{cumulative total 2 } (t_2\text{-}t_1) \right|,$$

the variation in said combined difference value P2 permitting the appearance or disappearance of defects to be detected.

8.  A process according to one of claims 1 to 7 characterised in that there is used at least one linear CCD camera (6) whose optical axis is so oriented that it does not form an angle of greater than about 30° with respect to a plane perpendicular to the axis of movement.

9.  A process according to one of claims 1 to 8 characterised in that there is used at least one linear CCD camera (7) whose optical axis is so oriented that it does not form an angle of less than about 60° with respect to a plane perpendicular to the axis of movement.

10. A process according to one of claims 1 to 9 characterised in that lighting of the region viewed by at least one camera is effected by at least one light source (10) which is supplied with stabilised-voltage direct current.

11. A process according to one of claims 1 to 10 characterised in that, when the long product is a rotationally symmetrical product, there are provided at least four linear CCD cameras (6) distributed around the axis of movement of the product, each having an optical axis inclined at less than 30° with respect to a plane perpendicular to the axis of movement of the product and at least six linear CCD cameras (7) distributed around the axis of movement of the product, each having an optical axis inclined at at least 60° with respect to a plane perpendicular to the axis of movement of the product.

12. A process according to one of claims 1 to 11 characterised in that the number of N1 pixels is determined in such a way as to permit data processing of the N1 numerical values during the time of an exposure and that, in the case of products of relatively great width, the N1 pixels are distributed over the width of the region of the bar of pixels which is occupied by the image, the other pixels whether they are or are not in the image region not being processed.

13. A process according to one of claims 1 to 12 characterised in that, in the case involving the use of at least one camera (7) whose optical axis is inclined at an angle of not less than 60° with respect to a plane perpendicular to the axis of movement of the product, the exposure time is increased in dependence on the reduction in the intensity of lighting of the bar of pixels and its optical characteristics with respect to the case involving a camera (6) whose optical axis is at a smaller angle to said plane perpendicular to the axis of movement.

14. A process according to one of claims 1 to 13 characterised in that a correction in respect of the numerical values "niv 1" which are measured on each of the pixels which are remote from the optical axis of each camera (6, 7) is effected in dependence on the spacing of said pixels with respect to the middle of the bar thereof.

15. A process according to claim 14 characterised in that, in the case involving detection of defects on rotationally symmetrical products (1), a correction in respect of the numerical values "niv i" which are measured on each of the pixels which are remote from the optical axis of each camera (6, 7) is effected in dependence on the spacing of said pixels with respect to the middle of the bar thereof, the diameter of the rotationally symmetrical product, the enlargement of the objective lens and the inclination of the optical axis of the camera with respect to the plane perpendicular to the axis of movement of the product to compensate for the lesser amount of light which is received by said pixels.

16. A process according to one of claims 1 to 15 characterised in that the N1 pixels are divided into a plurality of successive or partially overlapping zones of N2 pixels each and that processing of the values of "niv i", cumulative total 1, P1, cumulative total 2 and P2 is effected separately on each zone of N2 pixels.

17. Apparatus for the detection of surface defects on a long rotationally symmetrical metallic product (1) and in particular on rotationally symmetrical tubes, which is capable of moving along its axis, wherein there is used a plurality of linear CCD cameras (6, 7) each comprising a bar formed by a line of N pixels which is oriented transversely with respect to the axis of movement of the product, a suitable optical means for forming on the bar of pixels an image of a region of the surface of the product, a lighting means (10) for lighting said region and an entrainment and guide means (2, 3) for passing the product along the axis of movement thereof, a means for producing synchronisation signals for generating pixel clocks and line clocks of the camera in order to determine the exposure times thereof, a memory means for the storage of the data, and means (18, 19) for processing said data, characterised in that it comprises a first group of CCD cameras (6) which are distributed around the axis of movement and the optical axis of which is inclined by not more than 30° with respect to a plane perpendicular to said axis of movement and a second group of CCD cameras (7) which are distributed around the axis of movement and the optical axis of which is at an angle which is at least equal to 60° with respect to a plane perpendicular to said axis of movement, and that the data processing means (18, 19) comprise means permitting for each CCD camera the calculation of the cumulative differences between the levels of the numerical values of the lightings received by the pixels at the successive exposure times, each difference being taken in terms of algebraic value or absolute value for calculation of the cumulative differences.

18. Apparatus according to claim 17 characterised in that the first group of CCD cameras (6) comprises four thereof distributed around the axis of movement and the second group (7) comprises at least six thereof distributed around the axis of movement.

19. Apparatus according to claim 17 or claim 18 characterised in that marking means permit marking of the differences corresponding to defects along the product as it moves along.

20. Apparatus according to one of claims 17 to 19 characterised in that the means for lighting the wall of the rotationally symmetrical product is an annular fluorescent tube (10).

21. Apparatus according to one of claims 17 to 20 characterised in that, in order to permit monitoring of products (1) of different diameters, the assembly comprising the annular lighting means and the two groups of cameras is fixed with respect to a platform (4) which is displaceable vertically by way of a motor means.

22. Apparatus according to one of claims 17 to 21 characterised in that a means (11) for displacement parallel to the axis of movement of the product of the group of cameras (7) with their optical axis inclined at at least 60° with respect to a plane perpendicular to the axis of movement of the product is connected to the vertically displaceable platform (4) in order to obtain the maximum lighting effect for each product (1) diameter.

23. Apparatus according to one of claims 17 to 22 characterised in that the means for entrainment of the rotationally symmetrical product (1) along the axis of movement is formed by motorised rollers (2, 3).

Fig:1

Fig: 2

Fig:3

Fig: 4

SYNOPTIQUE DE LA CARTE D'ACQUISITION

Module de fabrication des signaux de synchronisation des caméras

CCD 1

Vidéo numérique

Table de sélection de N-1 pixels parmi 256

FIFOS

FIFO 1

Module de mise en forme et de fabrication des signaux de lecture

Fenêtre de validation des pixels

Données sur 16 bits

BUS PC

Fig : 5